# DEMANDE DE BREVET EUROPEEN

(11) **EP 2 316 271 A1**
(43) Date de publication de la demande: **04.05.2011**
(21) Numéro de dépôt: 09306012.7
(22) Date de dépôt: 26.10.2009
(51) Int. Cl.: A21D 10/02, A23L 1/00, A23L 1/29, A23L 1/30, A23L 1/307

(54) **Substitut de repas sous forme d'un aliment à cuire de type pain et d'un aliment d'accompagnement de type pâte à tartiner.**

(71) Demandeur: ET & DS Company Ltd, 3105 Limassol (CY)
(72) Inventeur: Blanchet, Jean-Marie, 67130 Lutzelhouse (FR)
(74) Mandataire: Littolff, Denis

(57) **Abrégé**

Substitut de repas intégrant les nutriments comportant l'ensemble des apports énergétiques et nutritionnels requis par la règlementation, caractérisé en ce qui se présente sous la forme d'une association d'un aliment à cuire de type pain ou gâteau et d'un aliment d'accompagnement de type pâte à tartiner ou crème obtenus à partir de deux mélanges pulvérulents distincts à mélanger avec de l'eau. Les composants du mélange pour la fabrication de l'aliment à cuire sont prévus pour l'obtention de pain ou de gâteau après cuisson de 2,5 à 6 minutes dans un four à micro-ondes, et les composants du mélange pour l'obtention de la pâte à tartiner ou de la crème incluent des micronutriments sensibles à la cuisson.

## Description

Les substituts de repas sont destinés à remplacer un repas complet en apportant les nutriments essentiels de façon à couvrir l'ensemble des besoins nutritionnels des personnes qui suivent un régime hypocalorique conformément à la règlementation en vigueur. La présente invention porte sur un substitut de repas pour le contrôle du poids réalisable de manière quasi instantanée à partir de poudre mélangée à de l'eau, en vue d'obtenir un repas se présentant sous une forme classique de tartines ou sandwichs. Dans la plupart des substituts de repas connus actuellement, une poudre est mélangée à de l'eau pour obtenir un aliment liquide sucré ou salé à consommer froid ou réchauffé. Le substitut ne prend donc pas la forme d'un repas solide, nécessitant une mastication des aliments, qui donne la sensation au consommateur de manger et non pas de seulement boire. En d'autres termes, les substituts actuels les plus répandus constituent une double rupture par rapport aux repas normaux, d'une part parce qu'ils cadrent de manière précise les apports énergétiques et nutritionnels ingérés, et d'autre part parce qu'ils remplacent un repas par une boisson et brisent dès lors le rituel traditionnel des repas et plus généralement des modes d'alimentation humains, qui privilégient naturellement une approche basée sur le goût et la texture des aliments, comportant des plats ou produits alimentaires différents pris en succession.

La présente invention constitue un substitut de repas sous forme solide qui oblige le consommateur à mâcher. Cela a deux intérêts : (i) le premier est que la mastication est perçue par les centres nerveux qui régulent la prise alimentaire. Le fait de mâcher augmente la sensation de satiété et limite la prise alimentaire, ce qui facilite l'assiduité au régime pour la perte de poids, (ii) le second est que le substitut de repas solide replace l'aliment qu'il forme dans une logique plus classique de repas, proposant au surplus dans une des configurations proposées une base alimentaire considérée comme tout à fait essentielle au moins dans les cultures occidentales : le pain. Le produit proposé permet de garder le plaisir et l'habitude d'un repas classique à base de pain ou équivalent en étant hypocalorique et en constituant un apport suffisant et équilibré, c'est à dire qu'il présente bien le profil traditionnel d'un substitut de repas pour remplacer un repas complet.

Il est évidemment conçu pour comporter l'ensemble des apports énergétiques et nutritionnels requis par la règlementation, et se caractérise - comme mentionné et à titre principal - en ce qu'il se présente sous la forme d'une association d'un aliment à cuire de type pain ou gâteau et d'un aliment d'accompagnement de type pâte à tartiner ou crème obtenus à partir de deux mélanges pulvérulents distincts à mélanger avec de l'eau, les composants du mélange pour la fabrication de l'aliment à cuire étant prévus pour l'obtention de pain ou de gâteau après cuisson de 2,5 à 6 minutes dans un four à micro-ondes, et les composants du mélange pour l'obtention de la pâte à tartiner ou de la crème incluant des micronutriments sensibles à la cuisson.

Le pain, en particulier, peut être présenté sous diverses formes, par exemple en boule ou galette, le temps de cuisson pouvant être différent selon ladite forme.

Le mélange des deux poudres avec de l'eau conduit à l'obtention de deux produits pâteux différents, dont l'un est soumis à cuisson rapide en vue d'aboutir à une texture solide pour la base du repas, ensuite découpable en tartines ou en portions sur lesquelles le second mélange pâteux ou liquide, sucré ou salé selon le repas et le goût de l'utilisateur, est disposé.

Les deux mélanges pulvérulents sont bien entendu conditionnés séparément. Dans la suite, on décrira l'invention sur la base de l'exemple préférentiel constitué de pain et de pâte à tartiner, bien que d'autre formes équivalentes de l'invention, comme par exemple des gâteaux avec de la crème, notamment des gâteaux au chocolat avec de la crème anglaise, puissent être mis en oeuvre.

Cette forme de substitut de repas permet aux consommateurs de conserver un type d'alimentation habituel, en gardant par exemple le même mode de consommation au petit déjeuner, avec des tartines de confiture. La pâte à tartiner selon l'invention sera alors conçue pour prendre l'aspect d'une confiture. Une autre forme de l'invention pourra par exemple remplacer l'habitude qu'ont les personnes pressées par le temps, de prendre un sandwich sur le pouce en guise de déjeuner, par un substitut de repas fait de tartines de pâte à tartiner aux légumes.

Le fait de ne pas chauffer ou cuire une partie du substitut de repas selon l'invention est essentiel dans la mesure où cela permet d'affecter des éléments sensibles à la cuisson au mélange pulvérulent destiné à produire la pâte à tartiner, et de garantir ainsi l'intégrité de certains micronutriments importants du substitut de repas, c'est à dire de préserver leurs caractéristiques et qualités propres. La distribution des composants du substitut alimentaire de l'invention entre le pain et la pâte à tartiner s'effectue notamment selon ce critère.

Un autre critère à prendre en compte pour l'affectation des composants à l'un ou à l'autre, sachant qu'ensemble, ils doivent contenir tous les éléments nécessaires à l'appellation de substitut alimentaire à la une des prescriptions règlementaires, concerne la fabrication du pain, et par conséquent l'autre mélange pulvérulent : le pain doit pouvoir être consommable à l'issue d'une durée de cuisson la plus brève possible, n'excédant pas quelques minutes.

La combinaison particulière des ingrédients du premier mélange pulvérulent a été spécialement étudiée et adaptée pour obtention d'un pain à cuisson express. En effet, la combinaison d'ingrédients et le procédé de préparation permettent une préparation et une cuisson 10 fois à 20 fois plus rapide que celle d'un pain traditionnel cuit au four électrique ou à l'aide d'une machine à pain.

Pour donner au pain une bonne consistance et une bonne qualité organoleptique, le mélange pulvérulent pour la fabrication du pain comprend au moins les ingrédients suivants :
- de la farine de blé,
- des protéines,
- de l'huile végétale,
- des fibres,
- de l'amidon,
- du sel,
- du pyrophosphate de sodium,
- du bicarbonate de sodium,
- de l'arôme de PAIN.

Plus précisément, la composition précédente peut comprendre les ingrédients suivants :
- de la farine de blé,
- de l'isolat de protéine de soja,
- de l'huile de soja,
- des protéines de lait,
- des fibres d'acacia et des fibres de blé,
- de l'amidon de manioc,
- du sel,
- du pyrophosphate de sodium,
- du bicarbonate de sodium,
- de l'arôme de PAIN.

Plus précisément encore, il a été constaté après essais que, pour avoir une très bonne consistance et texture, les proportions du mélange pulvérulent pour la fabrication du pain doivent être les suivantes, pour 100g de poudre :
- 36 à 78 g de farine de blé,
- 14 à 34 g d'isolat de protéine de soja,
- 3 à 8 g d'huile de soja,
- 2 à 6 g de protéine de lait,
- 1 à 5 g de fibres d'acacia et de fibres de blé,
- 0,5 à 2 g d'amidon de manioc,
- 0,3 à 0,9 g de sel,
- 0,35 à 0,9 g de pyrophosphate de sodium,
- 0,2 à 0,55 g de bicarbonate de sodium,
- 0,26 à 0,4 g d'arôme PAIN.

Et dans une forme préférée de l'invention, le mélange pulvérulent pour la fabrication du pain contiendra les quantités suivantes, toujours pour 100g :
- 60,350 g de farine de blé,
- 23,871 g d'isolat de protéine de soja,
- 5,125 g d'huile de soja,
- 4,375 g de protéine de lait concentrée,
- 3,000 g de fibres d'acacia et de fibres de blé,
- 1,250 g d'amidon de manioc,
- 0,625 g de sel,
- 0,625 g de pyrophosphate de sodium,
- 0,375 g de bicarbonate de sodium,
- 0,325 g d'arôme PAIN

Par ailleurs, il est possible d'intégrer au présent pain au moins un des ingrédients suivants et leur mélange : du guarana, de la gelée royale, de l'acérol et/ou une préparation enzymatique de façon à apporter une valeur ajoutée au produit.

Le guarana favorise le déstockage des graisses et a un effet énergisant important pour le maintien du dynamisme lors d'un régime minceur. La gelée royale est une source naturelle de micronutriments et contient des substances antibiotiques naturelles qui renforcent le système immunitaire. L'acérola est une source naturelle de vitamine C. Enfin, le complexe enzymatique permet une digestion facilitée du substitut de repas, dont la richesse en protéines et en sucres complexes ralentit la vidange gastrique.

Ces composants complémentaires sont ajoutés selon des proportions pondérales de l'ordre de 0,05 g à 0,3g g pour 100 g de poudre.

Le second mélange pulvérulent pour la fabrication de la pâte à tartiner, également dilué dans de l'eau, ne subit aucune étape de cuisson, ce qui permet comme mentionné de garantir l'intégrité des micronutriments sensibles à la cuisson. Cette poudre comprend des éléments tels que des vitamines, des minéraux, des composants donnant sa saveur à la pâte comme des légumes, des fruits, du chocolat, des arômes, ainsi que des glucides et des additifs.

Les vitamines et minéraux servent de base commune aux préparations sucrées et salées de l'accompagnement.

La différence entre les accompagnements sucrés et salés vient des proportions respectives des légumes, des fruits, des arômes et des additifs mélangés, ainsi que du dosage du chocolat.

Selon une possibilité, notamment validée par des tests gustatifs et de texture, les proportions relatives de ces éléments dans le mélange pulvérulent pour la fabrication de la pâte à tartiner peuvent être choisies - pour 100g - égales à :
- 49 à 88 g de légumes, fruits, chocolat, glucides, arômes et additifs,
- 0,15 à 0,35 g de vitamines,
- 10,5 à 25 g de minéraux,

Plus précisément, 100 g du mélange pulvérulent pour la fabrication de la pâte à tartiner sont composés de :
- 0,239 g de vitamines,
- 18,04 g de minéraux,
- 81,71 g de légumes, fruits, chocolat, glucides, arômes et additifs ;

Concernant les minéraux, ils sont apportés par les composés suivants : citrate tripotassique, phosphate monocalcique anhydre, carbonate de magnésium, phosphate tricalcique, sulfate de fer III, citrate de zinc, gluconate de manganèse, sulfate de cuivre, iodure de potassium et sélénite de sodium. Ils peuvent cependant être remplacés par d'autres substances minérales équivalentes.

Comme pour les vitamines, les besoins corporels en ces minéraux ne sont pas identiques d'un minéral à l'autre. Selon l'invention, le substitut de repas apporte les minéraux selon les quantités suivantes, pour 100 g du mélange pulvérulent réalisant la pâte à tartiner :
- 7,5 à 12,5 g de citrate tripotassique,
- 3 à 5 g de phosphate monocalcique anhydre,
- 2 à 3,4 g de carbonate de magnésium,
- 0,45 à 0,8 g de phosphate tricalcique,
- 0,09 à 0,15 g de sulfate de fer III,
- 0,05 à 0,09 g de citrate de zinc,
- 0,02 à 0,0375 g de gluconate de manganèse,
- 0,005 à 0,009 g de sulfate de cuivre,
- 0,00028 à 0,0005 g d'iodure de potassium,
- 0,000175 à 0,0003 g de sélénite de sodium.

Et dans une forme préférée de l'invention, la pâte à tartiner contient les quantités de minéraux suivant, toujours pour 100g :
- 10,250 g de citrate tripotassique,
- 4,225 g de phosphate monocalcique anhydre,
- 2,718 g de carbonate de magnésium,
- 0,625 g de phosphate tricalcique,
- 0,120 g de sulfate de fer III,
- 0,072 g de citrate de zinc,
- 0,03075 g de gluconate de manganèse,
- 0,00737 g de sulfate de cuivre,
- 0,000375 g d'iodure de potassium,
- 0,000237 g de sélénite de sodium.

Selon l'invention, le mélange pulvérulent pour la fabrication de la pâte à tartiner comprend au moins les vitamines suivantes :
- acide ascorbique,
- vitamine E,
- nicotinamide,
- vitamine A acétate,
- vitamine B5,
- vitamine D3,
- vitamine B6,
- vitamine B2,
- vitamine B1,
- vitamine B9,
- biotine
- vitamine B12.

Les besoins en vitamines ne sont pas identiques. En effet, certaines surdoses de vitamines sont dangereuses pour la personne. De ce fait, l'apport en vitamines se fait, pour 100 g, selon les quantités suivantes :
- 0,06 à 0,135 g d'acide ascorbique
- 0,04 à 0,09 g de vitamine E et ses dérivés,
- 0,02 à 0,045 g de nicotinamide et ses dérivés,
- 0,01 à 0,024 g de vitamine A et ses dérivés ,
- 0,008 à 0,019 g de vitamine B5 et ses dérivés,
- 0,0025 à 0,006 g de vitamine D3 et ses dérivés,
- 0,002 à 0,005 g de vitamine B6 et ses dérivés,
- 0,0017 à 0,004 g de vitamine B2 et ses dérivés,
- 0,0017 à 0,004 g de vitamine B1 et ses dérivés,
- 0,00027 à 0,0006 g de vitamine B9 et ses dérivés,
- 0,00006 à 0,00015 g de biotine et ses dérivés,
- 0,000003 à 0,000007 g de vitamine B12 et ses dérivés.

Et dans une forme préférée de l'invention, la pâte à tartiner contient les quantités de vitamines suivantes :
- 0,09633 g d'acide ascorbique
- 0,06505 g de vitamine E et ses dérivés,
- 0,03315 g de nicotinamide et ses dérivés,
- 0,01694 g de vitamine A et ses dérivés ,
- 0,01355 g de vitamine B5 et ses dérivés,
- 0,00413 g de vitamine D3 et ses dérivés,
- 0,00349 g de vitamine B6 et ses dérivés,
- 0,002915 g de vitamine B2 et ses dérivés,
- 0,002877 g de vitamine B1 et ses dérivés,
- 0,000454 g de vitamine B9 et ses dérivés,
- 0,000104 g de biotine et ses dérivés,
- 0,000005 g de vitamine B12 et ses dérivés.

Des légumes, fruits, aromates ou arômes peuvent également être ajoutés à la composition. Selon des possibilités propres à l'invention, les pâtes à tartiner peuvent être basées sur au moins un des ingrédients suivants, ou leur combinaison :
- de la poudre de tomate, des flocons de courgette, des fibres d'acacia ou de la poudre d'oignons grillés, des olives vertes en morceau, de la poudre de carotte ou de la poudre de céleri, lorsque la pâte à tartiner est salée ;
- de la poudre de fraise, de la poudre de framboise, de la poudre de myrtille, du colorant de betterave, de l'arôme de fraise, de l'arôme de framboise, de l'arôme de mûre ou du dextrose pour une pâte à tartiner sucrée.

D'autres composants peuvent cependant bien entendu être utilisés, comme par exemple du chocolat.

Selon une possibilité, le substitut de repas de l'invention contient en fait les composants suivants :
- Citrate tripotassique
- Phosphate monocalcique anhydre
- Carbonate de magnésium
- Phosphate tricalcique
- Sulfate de fer III
- Acide ascorbique
- Citrate de zinc
- Vitamine E
- Nicotinamide
- Gluconate de manganèse
- Vitamine A
- Vitamine B5
- Sulfate de cuivre
- Vitamine D3
- Vitamine B6
- Vitamine B2
- Vitamine B1
- Vitamine B9
- Iodure de potassium
- Sélénite de sodium
- Biotine
- Vitamine B12.

Ce substitut de repas est obtenu de façon particulière, en deux étapes. Dans l'exemple du pain et de la pâte à tartiner, la première étape consiste à réaliser le pain de la façon suivante :
- verser 48 g de la poudre permettant la fabrication du pain dans un récipient ;
- ajouter 60 ml d'eau ;
- mélanger la pâte obtenue jusqu'à former une boule, une galette ou toute autre forme;
- disposer la forme préparée dans un four micro-ondes ;
- faire cuire 2,5 à 6 mn à 750 W.

Il s'agit là de quantités données à titre d'exemple, et qui reposent sur l'existence d'une dose de 48g du premier mélange pulvérulent tel que disponible commercialement, comme ce sera aussi le cas pour l'exemple ci-dessous concernant le second mélange.

Il est par ailleurs possible de disposer au voisinage de ladite forme préparée un verre d'eau au moins partiellement rempli.

Dans un deuxième temps, le consommateur prépare la pâte à tartiner, selon les étapes suivantes :
- verser 45 ml d'eau froide dans un récipient,
- ajouter progressivement 16 g du second mélange pulvérulent tout en remuant pour obtenir une pâte homogène.

Ensuite le consommateur dépose l'accompagnement sucré ou salé sur le pain comme s'il réalisait une tartine ou un sandwich de façon à préparer son repas.

Selon un premier exemple selon l'invention, la composition destinée à réaliser la boule de pain contient :

| **Ingrédients** | **g/100g de poudre** | **g/portion reconstituée** |
|---|---|---|
| Farine de blé type 45 | 60,350 | 28,968 |
| Isolat de protéine de soja | 23,871 | 11,458 |
| Huile de soja | 5,125 | 2,46 |
| Protéine de lait concentrée | 4,375 | 2,1 |
| Fibres d'acacia et fibres de blé | 3,000 | 1,44 |
| Amidon de manioc | 1,250 | 0,6 |
| Sel | 0,625 | 0,3 |
| Pyrophosphate de sodium | 0,625 | 0,3 |
| Bicarbonate de sodium | 0,375 | 0,18 |
| Arome PAIN | 0,325 | 0,156 |
| Guarana 12 % | 0,058 | 0,02784 |
| Gelée royale lyophilisée | 0,019 | 0,00912 |
| Préparation enzymatique | 0,002 | 0,00096 |

La composition d'un accompagnement salé peut alors être réalisée avec les ingrédients et quantités suivants :

| **Ingrédients** | **g/100g de poudre** | **g/portion reconstituée** |
|---|---|---|
| Poudre de tomate | 28,75 | 4,6 |
| Flocons de courgette | 18,75 | 3 |
| Fibres d'acacia | 10,498 | 1,68 |
| Citrate tripotassique | 10,250 | 1,640 |
| Poudre d'oignon grillé | 10 | 1,6 |
| Phosphate monocalcique anhydre | 4,225 | 0,6760144 |
| Olives vertes en morceaux | 3,125 | 0,5 |
| Carbonate de magnésium | 2,718 | 0,43500928 |
| Gomme guar | 1,875 | 0,3 |
| Huile de soja | 1,25 | 0,2 |
| Dextrose | 1,25 | 0,2 |
| Arôme naturel de basilic | 1,25 | 0,2 |
| Sel | 1,094 | 0,175 |
| Gomme xanthane | 1 | 0,16 |
| Poudre de carotte | 1 | 0,16 |
| Phosphate tricalcique | 0,625 | 0,10000208 |
| Arôme bouillon | 0,625 | 0,1 |
| Aromate tomate-basilic-garlic | 0,469 | 0,075 |
| Acérola 25 % VitamineC | 0,279 | 0,045 |
| Maltodextrine | 0,209 | 0,033 |
| Poudre de céleri | 0,125 | 0,02 |
| Sulfate de fer III | 0,12 | 0,01920048 |
| Acide ascorbique à 99% | 0,09633 | 0,0154128 |
| Poivre gris moulu | 0,094 | 0,015 |
| Citrate de zinc | 0,07213 | 0,01154016 |
| Origan moulu | 0,069 | 0,011 |
| Vitamine E à 38,10% | 0,06505 | 0,01040864 |
| Nicotinamide à 99,7% | 0,03315 | 0,00530448 |
| Gluconate de manganèse | 0,03075 | 0,00492 |
| Vitamine A acétate à 9,75% | 0,01694 | 0,00271024 |
| Vitamine B5 à 91,6% | 0,01355 | 0,00216784 |
| Sulfate de cuivre | 0,007376 | 0,00118016 |
| Vitamine D3 à 0,25% | 0,004128 | 0,00066048 |
| Vitamine B6 à 82,8% | 0,00349 | 0,0005584 |
| Vitamine B2 à 99,20% | 0,002915 | 0,0004664 |
| Vitamine B1 à 78,98% | 0,002877 | 0,00046032 |
| Vitamine B9 à 91,15% | 0,000454 | 0,00007264 |
| Iodure de potassium | 0,000375 | 0,00006 |
| Sélénite de sodium | 0,000237 | 0,00003792 |
| Biotine à 99,40% | 0,000104 | 0,00001664 |
| Vitamine B12 à 97% | 0,000005 | 0,0000008 |

Dans l'hypothèse d'un accompagnement sucré, et suivant un exemple mis en oeuvre selon l'invention, la composition peut être la suivante :

| **Ingrédients** | **g/100g de poudre** | **g/portion reconstituée** |
|---|---|---|
| Dextrose | 25,524 | 3,444 |
| Matodextrine | 10,932 | 1,749 |
| Citrate tripotassique | 10,250 | 1,640 |
| Amidon de manioc | 9,383 | 1,501 |
| Poudre de fraise | 9,25 | 1,48 |
| Protéine de lait concentré | 6,25 | 1 |
| Inuline de chicorée | 4,888 | 0,782 |
| Phosphate monocalcique anhydre | 4,225 | 0,6760144 |
| Gomme guar | 3,75 | 0,6 |
| Colorant betterave | 3 | 0,48 |
| Arôme fraise | 3 | 0,48 |
| Arôme framboise | 3 | 0,48 |
| Carbonate de magnésium | 2,718 | 0,43500928 |
| Acide citrique | 2,5 | 0,4 |
| Arôme masquant minéraux | 1,375 | 0,22 |
| Poudre de framboise | 0,75 | 0,12 |
| Phosphate tricalcique | 0,625 | 0,10000208 |
| Gomme xanthane | 0,625 | 0,1 |
| Arôme mûre | 0,375 | 0,06 |
| Sucre caramélisé | 0,363 | 0,058 |
| Acérola 25 % VitamineC | 0,279 | 0,045 |
| Béta carotène 1 % | 0,213 | 0,034 |
| Poudre de myrtille | 0,125 | 0,02 |
| Sulfate de fer III | 0,12 | 0,01920048 |
| Acide ascorbique à 99% | 0,09633 | 0,0154128 |
| Acésulfame K | 0,075 | 3,444 |
| Citrate de zinc | 0,07213 | 0,01154016 |
| Vitamine E à 38,10% | 0,06505 | 0,01040864 |
| Sucralose | 0,056 | 2,888 |
| Nicotinamide à 99,7% | 0,03315 | 0,00530448 |
| Gluconate de manganèse | 0,03075 | 0,00492 |
| Vitamine A acétate à 9,75% | 0,01694 | 0,00271024 |
| Vitamine B5 à 91,6% | 0,01355 | 0,00216784 |
| Sulfate de cuivre | 0,007376 | 0,00118016 |
| Vitamine D3 à 0,25% | 0,004128 | 0,00066048 |
| Vitamine B6 à 82,8% | 0,00349 | 0,0005584 |
| Vitamine B2 à 99,20% | 0,02915 | 0,0004664 |
| Vitamine B1 à 78,97% | 0,002877 | 0,00046032 |
| Vitamine B9 à 91,15% | 0,000454 | 0,00007264 |
| Iodure de potassium | 0,000375 | 0,00006 |
| Sélénite de sodium | 0,000237 | 0,00003792 |
| Biotine à 99,40% | 0,000104 | 0,00001664 |
| Vitamine B12 à 97% | 0,000005 | 0,0000008 |

## Revendications

1. Substitut de repas intégrant les nutriments comportant l'ensemble des apports énergétiques et nutritionnels requis par la règlementation, **caractérisé en ce qu'**il se présente sous la forme d'une association d'un aliment à cuire de type pain ou gâteau et d'un aliment d'accompagnement de type pâte à tartiner ou crème obtenus à partir de deux mélanges pulvérulents distincts à mélanger avec de l'eau, les composants du mélange pour la fabrication de l'aliment à cuire étant prévus pour l'obtention de pain ou de gâteau après cuisson de 2,5 à 6 minutes dans un four à micro-ondes, et les composants du mélange pour l'obtention de la pâte à tartiner ou de la crème incluant des micronutriments sensibles à la cuisson.

2. Substitut de repas selon la revendication précédente, **caractérisé en ce que** le mélange pulvérulent pour la fabrication du pain comprend au moins les ingrédients suivants :
- de la farine de blé,
- des protéines,
- de l'huile végétale,
- des fibres,
- de l'amidon,
- du sel,
- du pyrophosphate de sodium,
- du bicarbonate de sodium,
- de l'arôme de PAIN.

3. Substitut de repas selon la revendication précédente, **caractérisé en ce que** le mélange pulvérulent pour la fabrication du pain comprend au moins les ingrédients suivants :
- de la farine de blé,
- de l'isolat de protéine de soja,
- de l'huile de soja,
- de la protéine de lait,
- des fibres d'acacia et des fibres de blé,
- de l'amidon de manioc,
- du sel,
- du pyrophosphate de sodium,
- du bicarbonate de sodium,
- de l'arôme PAIN.

4. Substitut de repas selon la revendication précédente, **caractérisé en ce que** 100g de mélange pulvérulent pour la fabrication du pain comprend les ingrédients suivants :
- 36 à 78 g de farine de blé,
- 14 à 34 g d'isolat de protéine de soja,
- 3 à 8 g d'huile de soja,
- 2 à 6 g de protéine de lait,
- 1 à 5 g de fibres d'acacia et des fibres de blé,
- 0,5 à 2 g d'amidon de manioc,
- 0,3 à 0,9 g de sel,
- 0,35 à 0,9 g de pyrophosphate de sodium,
- 0,2 à 0,55 g de bicarbonate de sodium,
- 0,26 à 0,4 g d'arôme PAIN.

5. Substitut de repas selon la revendication précédente, **caractérisé en ce que** 100 g du mélange pulvérulent pour la fabrication du pain sont composés de :
- 60,350 g de farine de blé,
- 23,871 g d'isolat de protéine de soja,
- 5,125 g d'huile de soja,
- 4,375 g de protéine de lait concentrée,
- 3,000 g de fibres d'acacia et de fibres de blé,
- 1,250 g d'amidon de manioc,
- 0,625 g de sel,
- 0,625 g de pyrophosphate de sodium,
- 0,375 g de bicarbonate de sodium,
- 0,325 g d'arome PAIN.

6. Substitut de repas selon la revendication précédente, **caractérisé en ce que** 100 g du premier mélange pulvérulent contient au moins un des ingrédient suivant ou leur mélange : du guarana, de la gelée royale, de l'acérola et/ou une préparation enzymatique, selon des quantités allant de 0,05 g à 0,3g.

7. Substitut de repas selon l'une des revendications précédentes **caractérisé en ce que** le mélange pulvérulent pour la fabrication de la pâte à tartiner comprend au moins :
- des vitamines,
- des minéraux,
- des glucides,
- des additifs, et
- des composants donnant sa saveur à la pâte du type légumes, fruits, chocolat, arômes.

8. Substitut de repas selon la revendication précédente, **caractérisé en ce que** 100 g du mélange pulvérulent pour la fabrication de la pâte à tartiner sont composés de :
- 49 à 88 g de légumes, fruits, arômes, chocolat, glucides et additifs,
- 0,15 à 0,35 g de vitamines,
- 10,5 à 25 g de minéraux.

9. Substitut de repas selon la revendication précédente, **caractérisé en ce que** 100 g du mélange pulvérulent pour la fabrication de la pâte à tartiner sont composés de :
- 0,239 g de vitamines,
- 18,04 g de minéraux,
- 81,71 g de légumes, fruits, chocolat, glucides, arômes et additifs.

10. Substitut de repas selon l'une des revendications 7 à 9, **caractérisé en ce que** le mélange pulvérulent pour la fabrication de la pâte à tartiner comprend, pour l'apport en minéraux, au moins par les composés suivants :
- citrate tripotassique,
- phosphate monocalcique anhydre,
- carbonate de magnésium,
- phosphate tricalcique,
- sulfate de fer III,
- citrate de zinc,
- gluconate de manganèse,
- sulfate de cuivre,
- iodure de potassium,
- sélénite de sodium.

11. Substitut de repas selon la revendication précédente, **caractérisé en ce que** pour 100 g du mélange pulvérulent pour la fabrication de la pâte à tartiner, l'apport en minéraux est de :
- 7,5 à 12,5 g de citrate tripotassique,
- 3 à 5 g de phosphate monocalcique anhydre,
- 2 à 3,4 g de carbonate de magnésium,
- 0,45 à 0,8 g de phosphate tricalcique,
- 0,09 à 0,15 g de sulfate de fer III,
- 0,05 à 0,09 g de citrate de zinc,
- 0,02 à 0,0375 g de gluconate de manganèse,
- 0,005 à 0,009 g de sulfate de cuivre,
- 0,00028 à 0,0005 g d'iodure de potassium,
- 0,000175 à 0,0003 g de sélénite de sodium.

12. Substitut de repas selon la revendication précédente, **caractérisé en ce que** pour 100 g du mélange pulvérulent pour la fabrication de la pâte à tartiner, l'apport en minéraux est de :
- 10,250 g de citrate tripotassique,
- 4,225 g de phosphate monocalcique anhydre,
- 2,718 g de carbonate de magnésium,
- 0,625 g de phosphate tricalcique,
- 0,12 g de sulfate de fer III,
- 0,072 g de citrate de zinc,
- 0,03075 g de gluconate de manganèse,
- 0,00737 g de sulfate de cuivre,
- 0,000375 g d'iodure de potassium,
- 0,000237 g de sélénite de sodium.

13. Substitut de repas selon l'une des revendications 7 à 12, **caractérisé en ce que** le mélange pulvérulent pour la fabrication de la pâte à tartiner comprend au moins les vitamines suivantes :
- acide ascorbique,
- vitamine E,
- nicotinamide,
- vitamine A,
- vitamine B5,
- vitamine D3,
- vitamine B6,
- vitamine B2,
- vitamine B1,
- vitamine B9,
- biotine,
- vitamine B12.

14. Substitut de repas selon la revendication précédente, **caractérisé en ce que** le mélange pulvérulent pour la fabrication de la pâte à tartiner comprend, pour 100g de mélange, les vitamines suivantes :
- 0,06 à 0,135 g d'acide ascorbique
- 0,04 à 0,09 g de vitamine E et ses dérivés,
- 0,02 à 0,045 g de nicotinamide et ses dérivés,
- 0,01 à 0,024 g de vitamine A et ses dérivés ,
- 0,008 à 0,019 g de vitamine B5 et ses dérivés,
- 0,0025 à 0,006 g de vitamine D3 et ses dérivés,
- 0,002 à 0,005 g de vitamine B6 et ses dérivés,
- 0,0017 à 0,004 g de vitamine B2 et ses dérivés,
- 0,0017 à 0,004 g de vitamine B1 et ses dérivés,
- 0,00027 à 0,0006 g de vitamine B9 et ses dérivés,
- 0,00006 à 0,00015 g de biotine et ses dérivés.
- 0,000003 à 0,000007 g de vitamine B12 et ses dérivés

15. Substitut de repas selon la revendication précédente, **caractérisé en ce que** le mélange pulvérulent pour la fabrication de la pâte à tartiner comprend, pour 100g de mélange, les vitamines suivantes :
- 0,09633 g d'acide ascorbique
- 0,06505 g de vitamine E et ses dérivés,
- 0,03315 g de nicotinamide et ses dérivés,
- 0,01694 g de vitamine A et ses dérivés ,
- 0,01355 g de vitamine B5 et ses dérivés,
- 0,00413 g de vitamine D3 et ses dérivés,
- 0,00349 g de vitamine B6 et ses dérivés,
- 0,002915 g de vitamine B2 et ses dérivés,
- 0,002877 g de vitamine B1 et ses dérivés,
- 0,000454 g de vitamine B9 et ses dérivés,
- 0,000104 g de biotine et ses dérivés,
- 0,000005 g de vitamine B12 et ses dérivés.

16. Substitut de repas selon l'une des revendication 7 à 15, **caractérisé en ce que** le mélange pulvérulent, utilisé comme pâte à tartiner salée, comprend au moins un des ingrédients suivants : de la poudre de tomate, des flocons de courgette, des fibres d'acacia ou de la poudre d'oignons grillés, des olives vertes en morceau, de la poudre de carotte ou de la poudre de céleri.

17. Substitut de repas selon l'une des revendication 7 à 15, **caractérisé en ce que** le second mélange pulvérulent, utilisé comme pâte à tartiner sucrée, comprend au moins un des ingrédients suivants : de la poudre de fraise, de la poudre de framboise, de la poudre de myrtille, du colorant de betterave, de l'arôme de fraise, de l'arôme de framboise, de l'arôme de mûre ou du dextrose.

18. Substitut de repas selon l'une des revendications 7 à 17, **caractérisé en ce qu'**il contient les composants suivants :
- Citrate tripotassique
- Phosphate monocalcique anhydre
- Carbonate de magnésium
- Phosphate tricalcique
- Sulfate de fer III
- Acide ascorbique
- Citrate de zinc
- Vitamine E
- Nicotinamide
- Gluconate de manganèse
- Vitamine A
- Vitamine B5
- Sulfate de cuivre
- Vitamine D3
- Vitamine B6
- Vitamine B2
- Vitamine B1
- Vitamine B9
- Iodure de potassium
- Sélénite de sodium
- Biotine
- Vitamine B12

19. Substitut de repas selon la revendication précédente, **caractérisé en ce que** pour 100 g du second mélange pulvérulent, il contient :
- Poudre de Tomate : 28,75 g
- Flocons de courgette : 18,75 g
- Fibres d'acacia : 10,498 g
- Citrate tripotassique : 10,250 g
- Poudre d'oignon grillé : 10 g
- Phosphate monocalcique anhydre : 4,225 g
- Olives vertes en morceaux : 3,125 g
- Carbonate de magnésium : 2,718 g
- Gomme guar : 1,875 g
- Huile de soja : 1,25 g
- Dextrose : 1,25 g
- Arôme naturel de BASILIC : 1,25 g
- Sel : 1,094 g
- Gomme xanthane : 1 g
- Poudre de carotte : 1 g
- Phosphate tricalcique : 0,625 g
- Arôme BOUILLON : 0,625 g
- AromateTomate-basil-garlic : 0,469 g
- Acérola 25 % Vitamine C : 0,279 g
- Maltodextrine : 0,209 g
- Poudre de céleri : 0,125 g
- Sulfate de fer III : 0,12 g
- Acide ascorbique à 99% : 0,09633 g
- Poivre gris moulu : 0,094 g
- Citrate de zinc : 0,07213 g
- Origan moulu : 0,069 g
- Vitamine E à 38,10% : 0,06505 g
- Nicotinamide à 99,7% : 0,03315 g
- Gluconate de manganèse : 0,03075 g
- Vitamine A acétate à 9,75% : 0,01694 g
- Vitamine B5 à 91,6% : 0,01355 g
- Sulfate de cuivre : 0,007376 g
- Vitamine D3 à 0,25% : 0,004128 g
- Vitamine B6 à 82,8% : 0,00349 g
- Vitamine B2 à 99,20% : 0,002915 g
- Vitamine B1 à 78,98% : 0,002877 g
- Vitamine B9 à 91,15% : 0,000454 g
- Iodure de potassium : 0,000375 g
- Sélénite de sodium : 0,000237 g
- Biotine à 99,40% : 0,000104 g
- Vitamine B12 à 97% : 0,000005 g

20. Substitut de repas selon la revendication 18, **caractérisé en ce que** pour 100 g du second mélange pulvérulent, il contient :
- Dextrose : 21,524 g
- Maltodextrine : 10,932 g
- Citrate tripotassique : 10,250 g
- Amidon de manioc : 9,383 g
- Poudre de fraise : 9,25 g
- Protéine de lait concentré : 6,25 g
- Inuline de chicorée : 4,888 g
- Phosphate monocalcique anhydre : 4,225 g
- Gomme guar : 3,75 g
- Colorant betterave : 3 g
- Arôme Fraise : 3 g
- Arôme Framboise : 3 g
- Carbonate de magnésium : 2,718 g
- Acide citrique : 2,5 g
- Arôme masquant minéraux : 1,375 g
- Poudre de framboise : 0,75 g
- Phosphate tricalcique : 0,625 g
- Gomme xanthane : 0,625 g
- Arôme Mûre : 0,375 g
- Sucre caramélisé : 0,363 g
- Acérola 25 % Vitamine C : 0,279 g
- Béta carotène 1% : 0,213 g
- Poudre de myrtille : 0,125 g
- Sulfate de fer III : 0,12 g
- Acide ascorbique à 99% : 0,09633 g
- Acésulfame K : 0,075 g
- Citrate de zinc : 0,07213 g
- Vitamine E à 38,10% : 0,06505g
- Sucralose : 0,056 g
- Nicotinamide à 99,7% : 0,03315 g
- Gluconate de manganèse : 0,03075 g
- Vitamine A acétate à 9,75% : 0,01694 g
- Vitamine B5 à 91,6% : 0,01355 g
- Sulfate de cuivre : 0,007376 g
- Vitamine D3 à 0,25% : 0,004128 g
- Vitamine B6 à 82,8% : 0,00349 g
- Vitamine B2 à 99,20% : 0,002915 g
- Vitamine B1 à 78,97% : 0,002877 g
- Vitamine B9 à 91,15% : 0,000454 g
- Iodure de potassium : 0,000375 g
- Sélénite de sodium : 0,000237 g
- Biotine à 99,40% : 0,000104 g
- Vitamine B12 à 97% : 0,000005 g

21. Procédé de préparation d'un substitut de repas du type pain et pâte à tartiner tel que décrit dans les revendications précédentes, **caractérisé en ce que** le pain est obtenu par les étapes suivantes :
- verser 48 g de la poudre permettant la fabrication du pain dans un récipient ;
- ajouter 60 ml d'eau ;
- mélanger la pâte obtenue jusqu'à former une boule, une galette ou toute autre forme ;
- disposer la forme préparée dans un four micro-ondes ;
- faire cuire 2,5 à 6 mn à 750 W.

22. Procédé selon la revendication précédente, **caractérisé en ce qu'**on dispose un verre au moins partiellement rempli d'eau au voisinage de la forme préparée.

23. Procédé de préparation d'un substitut de repas tel que décrit dans les revendications précédentes, **caractérisé en ce que** la pâte à tartiner est obtenue par les étapes suivantes :
- verser 45 ml d'eau froide dans un récipient ;
- ajouter progressivement 16 g du second mélange pulvérulent tout en remuant ;
- mélanger pour obtenir une pâte homogène.
